# EUROPÄISCHE PATENTSCHRIFT

(11) **EP 0 897 837 B1**
(45) Veröffentlichungstag und Bekanntmachung des Hinweises auf die Patenterteilung: **28.08.2002**
(21) Anmeldenummer: 98110658.6
(22) Anmeldetag: 10.06.1998
(51) Int. Cl.: B60R 21/20

(54) **Verfahren zum Falten eines Gassackes einer Aufprallschutzvorrichtung**
Method for folding an airbag of a crash protection device
Procédé de pliage d'un coussin gonflable d'un dispositif de protection de choc

(30) Priorität: 20.08.1997 DE 19736065
(43) Veröffentlichungstag der Anmeldung: 24.02.1999
(73) Patentinhaber: Dr.Ing.h.c. F. Porsche Aktiengesellschaft, 70435 Stuttgart (DE)
(72) Erfinder: Heinz, Martin, 70182 Stuttgart (DE)

(56) Entgegenhaltungen:
- WO-A-97/14586
- WO-A-97/21564
- US-A- 5 240 282
- US-A- 5 348 341
- US-A- 5 498 023

## Beschreibung

Die Erfindung betrifft ein Verfahren zum Falten eines Gassackes einer Aufprallschutzvorrichtung.

Gassäcke werden als Aufprallschutzvorrichtung in Fahrzeugen verwendet. Im Ruhezustand sind die Gassäcke zusammen mit einer Aufblasvorrichtung, üblicherweise einen Gasgenerator, in einem wannenförmigen Gehäuse verstaut, das beispielsweise einem Fahrer-, Beifahrer- oder Seitenairbag zugeordnet ist.

Aus der DE 25 36 933 A1 ist es bekannt, einen etwa kreisförmig ausgebildeten Gassack zunächst zu einer Bahn zusammenzulegen und anschließend die Enden der Bahn soweit einzuschlagen, daß ein Quadrat gebildet ist. Dieses Quadrat kann dann durch diagonales Einschlagen der Ecken weiter in quadratischer Form zusammengelegt werden. Bei einer derartigen Faltung bleibt die zunächst gebildete quadratische Grundform auch beim weiteren Einschlagen immer erhalten. Bei dieser Anordnung ist das Gehäuse etwa quadratisch ausgebildet und die außerhalb des Gassackes vorgesehene Aufblasvorrichtung ist an eine Gehäuseeinlaßöffnung an der rückwärtigen Fläche des Gassackes angeschlossen.

Die US-A-5,240,282 offenbart eine Gassack-Aufprallschutzvorrichtung für Fahrzeuginsassen, bestehend aus einem wannenförmigen Gehäuse, in dem eine Aufblaseinrichtung und der zusammengefaltete Gassack untergebracht sind, wobei die Aufblaseinrichtung durch einen langgestreckten Rohrgenerator gebildet wird und wobei der Gassack durch kombinierte Klapp- und Rollfaltungen in seine zusammengefaltete Stellung verbringbar und der Gassack durch eine ihn umhüllende Schutzabdeckhülle in dieser Stellung in Lage gehalten ist.

Aufgabe der Erfindung ist es, eine Gassack-Aufprallschutzvorrichtung und ein Verfahren zum Falten eines Gassackes zu schaffen, mit dem die Stauform des Gassackes einem wannenförmigen Gehäuse angepaßt ist.

Erfindungsgemäß wird diese Aufgabe durch die Merkmale des Anspruchs 1 gelöst.

Die mit der Erfindung hauptsächlich erzielten Vorteile sind darin zu sehen, daß der Gassack durch kombinierte Klapp- und Rollfaltungen in eine langgestreckte schmale Stauform bringbar ist, in der er durch eine ihn umhüllende Schutzabdeckhülle in Lage gehalten ist.

Durch die Kombination von Klapp- und Rollfaltungen wird ein besonders platzsparendes Faltpaket erzielt, so daß auch das Gehäuse zur Unterbringung des Gassackes wenig Bauraum beansprucht. Durch die Rollfaltung wird ein Rollpaket geschaffen, das sich in zusammengefalteter Stellung unmittelbar oberhalb des Rohrgenerators erstreckt und parallel zu diesem ausgerichtet ist. Ferner wird ein flächiges Ausbreiten beim Entfalten des Gassackes erzielt.

Ein Ausführungsbeispiel der Erfindung ist in den Zeichnungen dargestellt und im folgenden näher beschrieben.

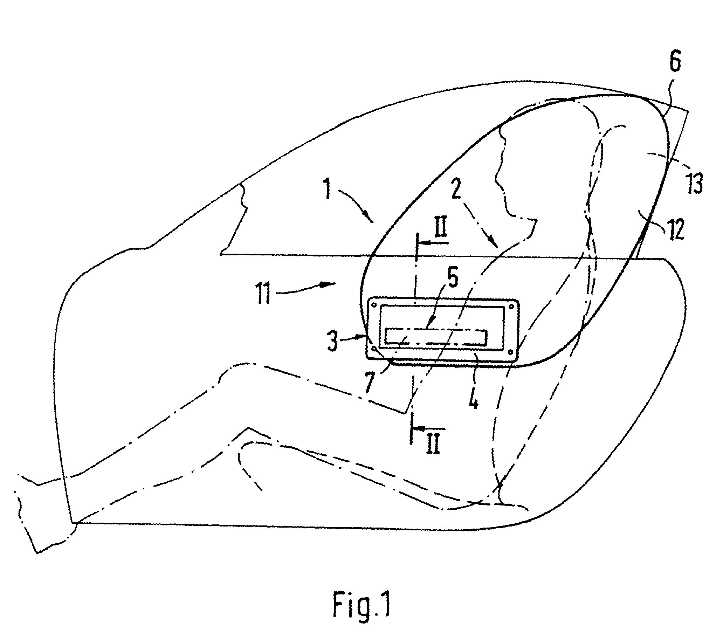

Es zeigen
- Fig. 1: eine Teilseitenansicht auf eine Gassack-Aufprallschutzvorrichtung für einen Insassen eine Fahrzeuges, wobei der Gassack eine aufgeblasene Betriebsstellung einnimmt,
- Fig. 2: einen Schnitt nach der Linie II-II der Fig. 1 in größerem Maßstab, wobei der Gassack in seiner zusammengefalteten Stellung dargestellt ist,
- Fig. 3: eine perspektivische Ansicht auf den von einem Generatorträger in Lage gehaltenen Rohrgenerator,
- Fig. 4: eine Draufsicht auf den Gassack im Anlieferungszustand,
- Fig. 5: eine Draufsicht entsprechend Fig. 4, wobei die Faltlinien a und b für die ersten beiden Klappfaltungen dargestellt sind,
- Fig. 6: eine Draufsicht auf den Gassack, wobei ein oberer und ein unterer Randbereich des Gassackes ihre eingeklappte Stellung innerhalb eines langgestreckten trapezförmigen Gebildes einnehmen und eine Faltlinie c für den schmalen Endbereich des trapezförmigen Gebildes dargestellt ist,
- Fig. 7: eine Draufsicht entsprechend Fig. 6, wobei der schmale Endbereich um die Faltlinie c eingeschlagen und eine Begrenzungslinie d dargestellt ist,
- Fig. 8: eine Draufsicht auf den Gassack, wobei der schmale Endbereich durch mehrmalige Rollfaltung nach innen bis zur Linie d zu einem Rollpaket zusammengefaltet ist,
- Fig. 9: eine Draufsicht auf den Gassack, wobei das Rollpaket durch Einklappen um etwa 90° nach innen etwa parallel zum Rohrgenerator ausgerichtet ist, jedoch in Längsrichtung gesehen versetzt zu diesem verläuft,
- Fig. 10: eine Draufsicht auf den Gassack, wobei das Rollpaket um die Faltlinie e etwa um 180° auf den Rohrgenerator geklappt ist,
- Fig. 11: eine Draufsicht auf den Gassack, wobei ein oberer Gassackbereich auf das Rollpaket um eine Faltlinie f eingeklappt ist,
- Fig. 12: eine Draufsicht auf den Gassack, wobei ein unterer Randbereich um eine Faltlinie g auf das Rollpaket eingeklappt ist,
- Fig. 13: eine Draufsicht auf den zusammengefalteten Gassack, wobei die Schutzabdeckhülle um den gefalteten Gassack herumgeführt ist,
- Fig. 14: eine Draufsicht auf den zusammengefalteten Gassack, wobei die seitlichen Enden des Gassackes unter die Schutzabdeckhülle eingesteckt sind und
- Fig. 15: eine Draufsicht auf das vollständig zusammengefaltete, mit der Schutzabdeckhülle versehene Faltpaket, wobei die Haltelaschen der Schutzabdeckhülle an den Befestigungsbolzen des Generatorträgers eingehängt sind.

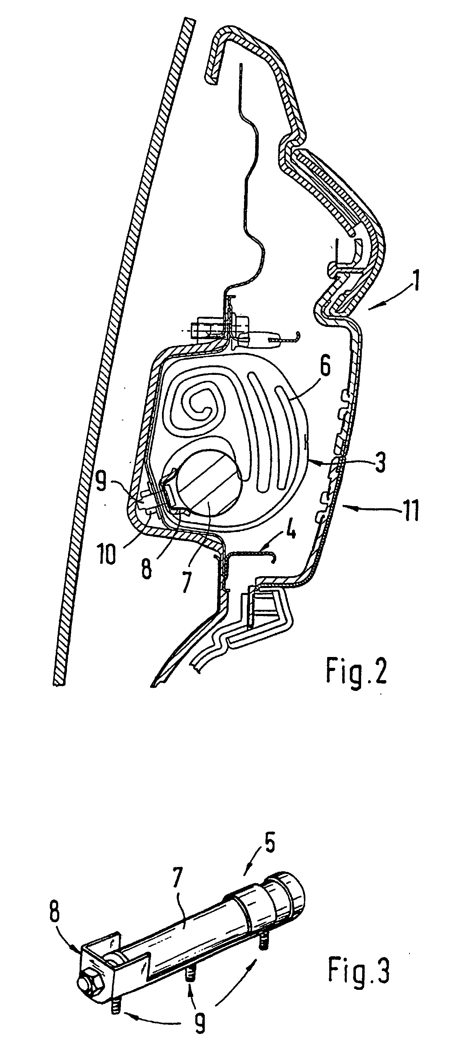

Eine Gassack-Aufprallschutzvorrichtung 1 für einen Insassen 2 eines Fahrzeuges umfaßt ein vorgefertigtes Einbaumodul 3, das sich aus einem wannenförmigen Gehäuse 4, einer Aufblaseinrichtung 5 und einem Gassack 6 zusammensetzt. Im Ausführungsbeispiel wird die Aufblaseinrichtung 5 durch einen langgestreckten Rohrgenerator 7 gebildet, der an einem Generatorträger 8 befestigt ist (Fig. 3). Rohrgenerator 7 und Generatorträger 8 bilden eine vormontierte Baueinheit, die vor dem Faltvorgang des Gassackes 6 vollständig in das Innere des Gassackes 6 eingesetzt und mit diesem verbunden ist.

Im Ausführungsbeispiel sind am Generatorträger 8 mehrere beabstandet angeordnete vorstehende Befestigungsbolzen 9 mit einem Außengewinde vorgesehen. Die Befestigungsbolzen 9 werden durch korrespondierende Bohrungen des Gassackes 6 sowie durch Öffnungen des Gehäuses 4 hindurchgesteckt. Auf die vorstehenden freien Enden der Befestigungsbolzen 9 werden von der Außenseite her Muttern 10 aufgeschraubt (Fig. 2). Im Ausführungsbeispiel ist das vorgefertigte Einbaumodul 3 einer Seitenaufprallschutzeinrichtung 11 zugeordnet. Das Einbaumodul 3 könnte jedoch auch bei einem Beifahrer- oder Fahrerairbag vorgesehen sein.

Der für eine Seitenaufprallschutzeinrichtung 11 relativ großvolumige Gassack 6 (Volumen ca. 30 Liter) setzt sich aus zwei etwa gleich großen übereinanderliegend angeordneten Gewebelagen 12, 13 zusammen, die randseitig über eine oder mehrere umlaufende Nähte miteinander verbunden sind. Die in aufgeblasenem Zustand dem Fahrzeuginsassen 2 zugekehrte Gewebelage ist mit dem Bezugszeichen 12 versehen, wogegen an der dem Fahrzeuginsassen 2 abgekehrten Gewebelage 13 eine nicht nächer dargestellte Einführöffnung zum Einsetzen des Rohrgenerators 7 und des Generatorträgers 8 vorgesehen ist An der Gewebelage 13 erfolgt die Befestigung des Generatorträgers 8.

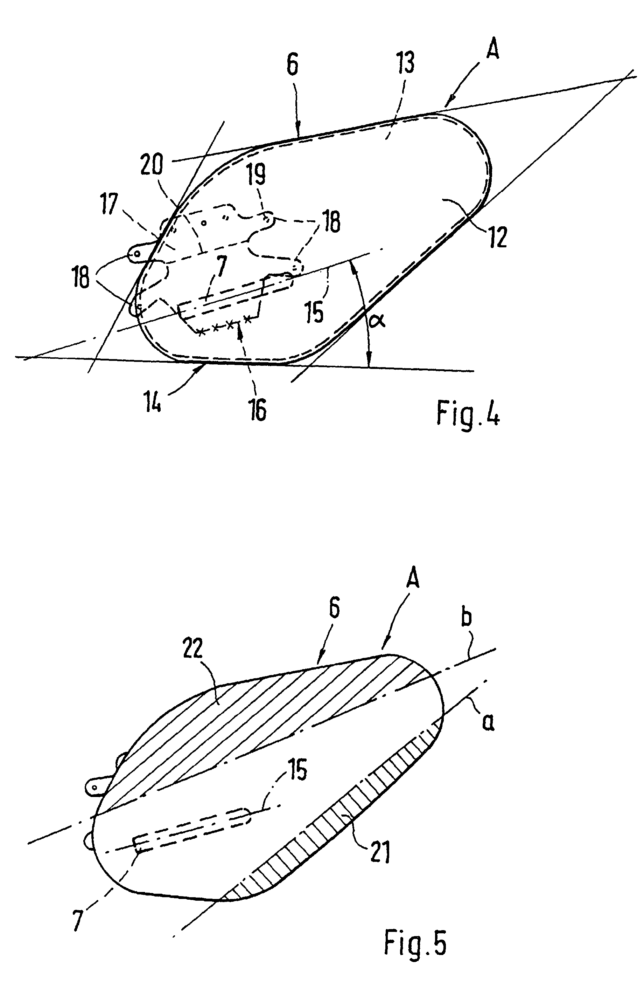

Im Anlieferungszustand A des Gassackes 6 weisen die beiden übereinanderliegenden Gewebelagen 12, 13 etwa die Form eines unregelmäßigen Viereckes auf, wobei angrenzende Seiten des Vierecks jeweils über gerundete Übergangsbereiche miteinander verbunden sind (siehe Fig. 4). Die untere Seite 14 des Gassackes 6 ist etwa horizontal ausgerichtet. Eine Längsmittelebene 15 des Rohrgenerators 7 verläuft unter einem Winkel a zur unteren Seite 14. An der Gewebelage 13 ist ein freies Ende 16 einer Schutzabdeckhülle 17 befestigt. Die Schutzabdeckhülle 17 weist vier vorstehende Haltelaschen 18 auf, wobei jede Haltelasche 18 benachbart ihrem freien Ende mit einer kreisförmigen Öffnung 19 versehen ist. Die Schutzabdeckhülle 17 umgibt den Gassack 6 in seiner zusammengefalteten Stellung und weist eine langgestreckte Sollbruchstelle 20 auf, die beim Aufblasen des Gassackes 6 reißt. In Fig. 4 ist der Anlieferungszustand des Gassackes 6 mit eingebautem Rohrgenerator 7 dargestellt, die Gewebelage 12 liegt oben.

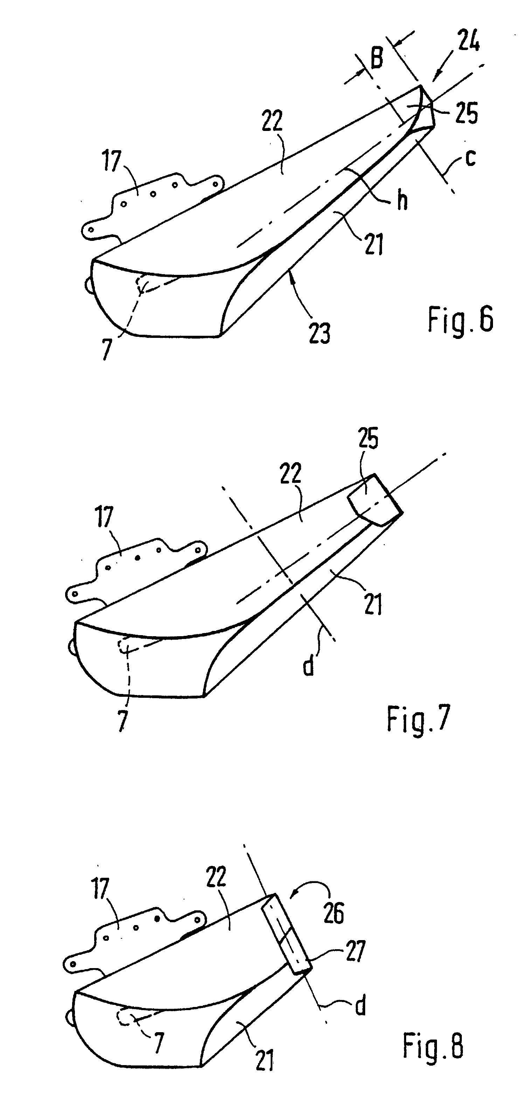

Die erfindungsgemäße Faltung des Gassackes 6 durch kombinierte Klapp- und Rollfaltungen erfolgt zumindest teilweise auf einer Faltmaschine und umfaßt folgende Schritte. Zuerst wird ein unterer Randabschnitt 21 des Gassackes 6 um die Faltlinie a nach innen auf die Gewebelage 12 gefaltet (siehe Fig. 5). Danach wird in gleicher Weise ein oberer Randabschnitt 22 des Gassackes 6 um eine Faltlinie b nach innen ebenfalls auf die Gewebelage 12 umgeschlagen, so daß ein schmales langgestrecktes etwa trapezförmiges Gebilde 23 entsteht (Fig. 6). Auf der nicht näher dargestellten Faltmaschine wird die Lage der Randabschnitte 21, 22 zueinander und die Lage der Mittelachse h kontrolliert, die senkrecht zur Faltlinie c verläuft. In einem weiteren Schritt wird das Gebilde 23 an seinem schmalen Ende 24 um eine Faltlinie c nach innen umgeschlagen (Maß B), so daß der Endbereich 25 auf den umgeschlagenen Randabschnitten 21, 22 zu liegen kommt (siehe Fig. 7).

Danach erfolgt eine mehrmalige Rollfaltung 26 des schmalen Endbereiches 25 in Richtung Rohrgenerator 7 und zwar so lange, bis das Rollpaket 27 etwa über einer Begrenzungslinie d zu liegen kommt (siehe Fig. 8).

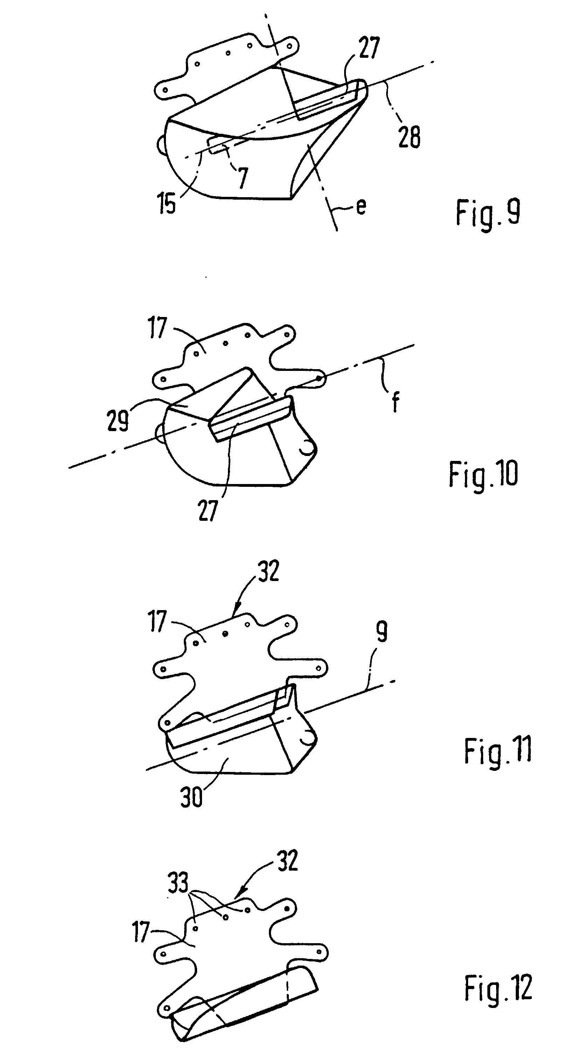

Im nächsten Schritt wird das Rollpaket 27 durch Einklappen um etwa 90° so nach innen bewegt, daß die Mittelachse 28 des Rollpakets 27 etwa gleichgerichtet zur Längsmittelebene 15 des Rohrgenerators 7 verläuft. In dieser Stellung sind das eingeklappte Rollpaket 27 und der Rohrgenerator 7 - in Längsrichtung gesehen - hintereinanderliegend aneinandergesetzt (Fig. 9).

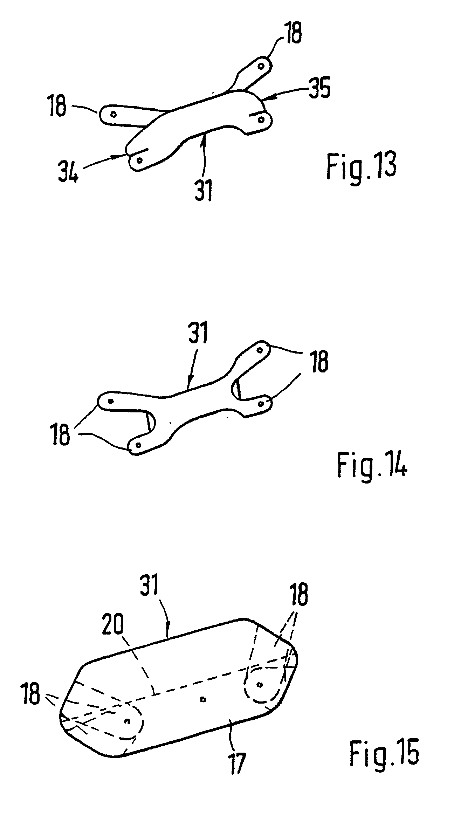

In einem weiteren Schritt wird das eingeklappte Rollpaket 27 um eine etwa senkrecht dazu verlaufende Linie e über den Rohrgenerator 7 geklappt (Fig. 10). Danach wird der oberhalb der Längsachse des Rollpakets 27 liegende obere Gassackbereich 29 um die Linie f nach innen gefaltet und anschließend wird der unterhalb der Längsachse des Rollpakets 27 liegende untere Gassackbereich 30 um die Linie g nach oben über das eingeschlagene obere Teil gefaltet (Fig. 11 und 12). Nunmehr wird die Schutzabdeckhülle 17 um das Faltpaket 31 herumgeschlagen (Fig. 13) und das freie Ende 32 der Schutzabdeckhülle 17 wird an den vorstehenden Befestigungsbolzen 9 des Generatorträgers 8 eingehängt. Hierzu sind an der Schutzabdeckhülle 17 entsprechende Öffnungen 33 ausgebildet.

In einem letzten Schritt werden die seitlichen Haltelaschen 18 der Schutzabdeckhülle 17 nach innen und ebenfalls an den vorstehenden Befestigungsbolzen 9 eingehängt. Vor dem Einhängen der Haltelaschen 18 werden die seitlichen Endbereiche 34, 35 des Faltpakets 31 nach innen unter die Schutzabdeckhülle 17 gesteckt (Fig. 14). Das so zusammengelegte Faltpaket 31 gemäß Fig. 15 wird in das Gehäuse 4 eingesetzt und mit diesem fest verbunden.

## Patentansprüche

1. Verfahren zum Falten eines Gassackes einer Aufprallschutzvorrichtung zur Unterbringung in einem Gehäuse, in dem eine Aufblasvorrichtung und der zusammengefaltete Gassack untergebracht sind, wobei die Aufblasvorrichtung durch einen langgestreckten vollständig innerhalb des Gassackes angeordneten Rohrgenerator gebildet wird, mit folgenden Schritten:
- Einschlagen eines unteren Randabschnittes (21) des Gassackes (6) um eine Faltlinie (a) nach innen und Einschlagen eines oberen Randabschnittes (22) des Gassackes (6) um eine Faltlinie (b) nach innen, wodurch eine langgestrecktes etwa trapezförmiges Gebilde (23) entsteht;
- Einschlagen eines Randbereiches (25) um eine Faltlinie (c) nach innen im Bereich des schmalen Endes (24) des trapezförmigen Gebildes (23);
- Mehrmalige Rollfaltung des eingeschlagenen Randbereiches (25) nach innen bis zu einer Begrenzungslinie (d) unter Bildung eines Rollpakets (27);
- Einklappen des Rollpakets (27), so daß dieses etwa parallel zur Längsachse (15) des langgestreckten Rohrgenerators (7) und mit Längenversatz zu diesem verläuft;
- Klappen des Rollpakets (27) und des darunterliegenden Gassackbereiches um etwa 180° um die Faltlinie (e) nach innen, so daß das Rollpaket (27) oberhalb des Rohrgenerators (7) zu liegen kommt;
- Einschlagen des oberen Gassackbereiches (29) um die Faltlinie (f) nach innen auf das Rollpaket (27);
- Einschlagen des unteren Gassackbereiches (30) um die Faltlinie (g) nach innen auf das Rollpaket (27);
- Umhüllen des zusammengefalteten Gassackes (16) mit einer an der Gewebelage (13) befestigten Schutzabdeckhülle (17) und Einhängen des freien Endes der Schutzabdeckhülle (17) an den Befestigungsbolzen (9) des Generatorträgers (8);
- Einstecken der seitlichen Enden des Gassackes (6) unter die Schutzabdeckhülle (17);
- Einhängen der seitlichen Haltelaschen (18) der Schutzabdeckhülle (17) an den Befestigungsbolzen (9) des Generatorträgers (8).

## Claims

1. A method of folding an airbag of an impact-protection device for arrangement in a casing in which an inflation device and the folded-up airbag are arranged, wherein the inflation device is formed by an elongate tube generator arranged completely inside the airbag, with the following steps:
- folding a lower edge portion (21) of the airbag (6) inwards around a folding line (**a**) and folding an upper edge portion (22) of the airbag (6) inwards around a folding line (**b**), as a result of which a substantially trapezoidal elongate outline (23) is produced;
- folding an edge region (25) inwards around a folding line (**c**) in the region of the narrow end (24) of the trapezoidal outline (23);
- rolling and folding the folded edge region (25) inwards several times as far as a boundary line (**d**) so as to form a rolled pack (27);
- folding-in the rolled pack (27) so that it extends substantially parallel to the longitudinal axis (15) of the elongate tube generator (7) and with a longitudinal offset with respect thereto;
- folding the rolled pack (27) and the region of the airbag situated thereunder inwards by about 180° around the folding line (e), so that the rolled pack (27) comes to be situated above the tube generator (7);
- folding the upper region (29) of the airbag inwards around the folding line (**f**) onto the rolled pack (27);
- folding the lower region (30) of the airbag inwards around the folding line (**g**) onto the rolled pack (27);
- enveloping the folded-up airbag (6) with a protective cover (17) secured to the layer of fabric (13) and suspending the free end of the protective cover (17) on the fastening pins (9) of the generator support (8);
- inserting the lateral ends of the airbag (6) under the protective cover (17), and
- suspending the lateral holding plates (18) of the protective cover (17) on the fastening pins (9) of the generator support (8).

## Revendications

1. Procédé de pliage d'un sac gonflable d'un dispositif de protection en cas de collision, destiné à être logé dans un boîtier dans lequel se trouve un dispositif de gonflage. ainsi que le sac gonflable replié, le dispositif de gonflage étant formé par un générateur tubulaire allongé entièrement disposé à l'intérieur du sac gonflable, comportant les étapes suivantes :
- repliement vers l'intérieur d'une bordure inférieure (21) du sac gonflable (6) autour d'une ligne de pliage (a), et repliement vers l'intérieur d'une bordure supérieure (22) du sac gonflable (6) autour d'une ligne de pliage (b), ce qui donne lieu à une structure (23) allongée approximativement trapézoïdale ;
- repliement vers l'intérieur d'une zone de bordure (25) autour d'une ligne de pliage (c) dans la zone de l'extrémité étroite (24) de la structure trapézoïdale (23) ;
- enroulement multiple vers l'intérieur de la zone de bordure (25) repliée jusqu'à une ligne de délimitation (d) pour former un paquet enroulé (27);
- rabattement du paquet enroulé (27) de manière que celui-ci s'étende approximativement parallèlement à l'axe longitudinal (15) du générateur tubulaire (7) allongé et soit décalé dans sa longueur par rapport à celui-ci ;
- repliement vers l'intérieur du paquet enroulé (27) et de la zone située au-dessous du sac gonflable, de 180° environ, autour de la ligne de pliage (e), de manière que le paquet enroulé (27) vienne se placer au-dessus du générateur tubulaire (7) ;
- repliement vers l'intérieur de la zone supérieure (29) du sac gonflable autour de la ligne de pliage (f), sur le paquet enroulé (27) ;
- repliement vers l'intérieur de la zone inférieure (30) du sac gonflable autour de la ligne de pliage (g), sur le paquet enroulé (27) ;
- enveloppement du sac gonflable (16) replié au moyen d'une enveloppe de couverture et de protection (17) fixée à la couche de tissu (13), et accrochage de l'extrémité libre de l'enveloppe de couverture et de protection (17) au boulon de fixation (9) du support (8) du générateur ;
- enfilage des extrémités latérales du sac gonflable (6) sous l'enveloppe de couverture et de protection (17) ;
- accrochage des pattes de maintien (18) latérales de l'enveloppe de couverture et de protection (17) au boulon de fixation (9) du support (8) du générateur.
